# EUROPÄISCHE PATENTSCHRIFT

(11) **EP 1 573 282 B1**
(45) Veröffentlichungstag und Bekanntmachung des Hinweises auf die Patenterteilung: **27.02.2019**
(21) Anmeldenummer: 03782331.7
(22) Anmeldetag: 08.12.2003
(51) Int. Cl.: G01F 23/296

(54) **VORRICHTUNG ZUR BESTIMMUNG UND/ODER ÜBERWACHUNG MINDESTENS EINER PHYSIKALISCHEN GRÖSSE MIT EINEM PIEZOANTRIEB ZUR SCHWINGUNGSERREGUNG UND -DETEKTION**
DEVICE FOR DETERMINING AND/OR MONITORING AT LEAST ONE PHYSICAL VARIABLE COMPRISING A PIEZO DRIVE FOR EXCITING AND DETECTING OSCILLATIONS
DISPOSITIF POUR DETERMINER ET/OU SURVEILLER AU MOINS UNE GRANDEUR PHYSIQUE, COMPORTANT UNE COMMANDE PIEZOELECTRIQUE SERVANT A L'EXCITATION ET A LA DETECTION D'OSCILLATIONS

(30) Priorität: 19.12.2002 DE 10260088
(43) Veröffentlichungstag der Anmeldung: 14.09.2005
(73) Patentinhaber: Endress+Hauser SE+Co. KG, 79689 Maulburg (DE)
(72) Erfinder: LOPATIN, Sergej, 79540 Lörrach (DE)
(74) Vertreter: Andres, Angelika Maria
(86) Internationale Anmeldenummer: PCT/EP2003/013892
(87) Internationale Veröffentlichungsnummer: WO 2004/057283

(56) Entgegenhaltungen:
- EP-A- 0 875 739
- WO-A-01/86236
- US-A- 5 371 430
- US-A- 6 148 665

## Beschreibung

Die Erfindung bezieht sich auf eine Vorrichtung zur Bestimmung und/oder Überwachung mindestens einer physikalischen Größe eines Mediums mit mindestens einer mechanisch schwingfähigen Einheit und mindestens einer Antriebs-/Empfangseinheit, wobei die Antriebs-/Empfangseinheit die schwingfähige Einheit zu Schwingungen anregt, bzw. wobei die Antriebs-/Empfangseinheit die Schwingungen der schwingfähigen Einheit empfängt.

Die Patente US-4 740 726 und US-5 247 832 beschreiben einen Vibrationsresonator mit einer äußeren Röhre und einem inneren Schwingstab. Für die Schwingungserregung ist jeweils ein piezo-elektrisches Element in einer Vertiefung des inneren Schwingstabs befestigt. Dieser Schwingstab weist eine rechteckige, längliche Form auf. Durch das piezo-elektrische Element wird ein Biegemoment auf den Stab ausgeübt, das in Verbindung mit der Ausgestaltung des Stabes zu Kippbewegungen führt.

EP 0 875 739 offenbart die Präambel des Anspruchs 1.

Nachteilig an diesen Patenten ist, dass spezielle Anforderungen bzgl. der Ausgestaltung des Schwingstabs und der Anbringung des piezo-elektrischen Elements bestehen. Weiterhin wird der Schwingstab nicht direkt zu Kippschwingungen angeregt, sondern zu Biegeschwingungen, die durch die Geometrie des Schwingstabs und durch die Anbringung des piezo-elektrischen Elements am Schwingstab zu Kippschwingungen führen.

Das Prinzip dieser Schwingungserregung ist folgendes: Ein piezo-elektrisches Element wird auf der schwingfähigen Einheit oder auf einer passenden Membran aufgebracht, z.B. mit einer Klebeverbindung. Wird eine Spannung an das piezo-elektrische Element angelegt, so kommt es zu einer Längenänderung. Da zwar das piezo-elektrische Element mit der schwingfähigen Einheit verbunden ist, da die schwingfähige Einheit aber keine Längenausdehnung erfährt, führt dies dazu, dass sich das piezo-elektrische Element und die schwingfähige Einheit verbiegen. Durch das Anlegen einer Wechselspannung ergibt sich somit eine Biegeschwingung. Durch die spezielle Ausgestaltung der schwingfähigen Einheit muss sinnvollerweise sichergestellt werden, dass es eine Vorzugsrichtung für diese Schwingung gibt. Weiterhin muss das piezo-elektrische Element so mit der schwingfähigen Einheit verbunden werden, dass die Längenänderung im Wesentlichen in die Biegebewegung übertragen wird. Gleichzeitig muss die Verbindung auch so beschaffen sein, dass sie auch im verbogenen Zustand noch hält. Eine bevorzugte Methode ist die Verbindung mittels eines Klebers. Kleber ermöglichen jedoch meist nur den Einsatz bis zu einer bestimmten Temperatur.

Alles in allem ist die Methode über den Umweg der Biegeschwingungen also sehr aufwendig. Es ist eine spezielle Ausgestaltung in Hinsicht auf die Art der Fixierung des piezo-elektrischen Elements und in Hinsicht auf die Geometrie der schwingfähigen Einheit erforderlich. Die bevorzugte Anbringung durch Kleber hat weiterhin das Problem, dass solche Klebstoffe nur bis zu bestimmten Temperaturen einsetzbar sind. Zudem ist es eine prinzipiell unbefriedigende Methode, dass die Kippbewegung der schwingfähigen Einheit nur über den Zwischenschritt der Biegeschwingung erzielt werden kann.

Aufgabe der Erfindung ist es, mit einer Vorrichtung eine mechanisch schwingfähige Einheit zu Schwingungen anzuregen, bzw. deren Schwingungen zu detektieren, wobei die Vorrichtung möglichst einfach und kostengünstig sein soll. Dies auch in Bezug auf Einbau und in Bezug auf die Ausgestaltung der für die Anwendung benötigten übrigen Bauteile. Weiterhin soll die Vorrichtung ermöglichen, dass sich die Schwingungen direkt erzeugen, bzw. direkt empfangen lassen, ohne dass der Umweg über eine andere Bewegungsform genommen werden muss.

Die Aufgabe wird durch die Erfindung derart gelöst, dass in der Antriebs- und Empfangseinheit mindestens ein piezo-elektrisches Element vorgesehen ist, das über mindestens eine Außenfläche verfügt, die aus mindestens zwei Segmenten mit unterschiedlicher Polarisation besteht, wobei die Polarisationsrichtungen im Wesentlichen einander entgegengerichtet sind, dass mit der Außenfläche die mechanisch schwingfähige Einheit direkt oder indirekt verbunden ist, so dass die mechanisch schwingfähige Einheit zu einer Bewegung angeregt wird, bzw. so dass eine Bewegung der mechanisch schwingfähigen Einheit empfangen wird, wobei die Bewegung jeweils aus mindestens zwei unterschiedlichen Kraftkomponenten besteht, die einander im Wesentlichen entgegengesetzt sind, und wobei es sich bei den Kraftkomponenten um Zug und Druck, und bei der Bewegung um eine Kippbewegung oder um eine Drehbewegung handelt.

Erfindungsgemäß sind die Ausgestaltung, in der die Kraftkomponenten der Bewegung einander entgegengesetzt sind, bzw. handelt es sich bei den Kraftkomponenten um Zug und Druck und bei der es sich bei der Bewegung um eine Kippbewegung oder um eine Drehbewegung. Ein großer Vorteil der Erfindung liegt darin, dass eine Kippbewegung erzeugt wird. Es handelt sich nicht mehr um eine Biegebewegung, deren Umsetzung in ein Kippmoment durch die spezielle Anbringung des Piezoantriebs an einem speziell geformten Stab realisiert wird. Dies ermöglicht es, dass die mechanisch schwingfähige Einheit quasi beliebige Form haben und dass der
Antrieb platzsparend und einfach montiert werden kann. Weiterhin entfallen die Kosten einer aufwendigen Verarbeitung und Vorbereitung.

Bei der zu bestimmenden oder zu überwachenden physikalischen Größe handelt kann es sich um den Füllstand, um die Viskosität, um die Dichte oder um die Temperatur eines Mediums.

Eine vorteilhafte Realisierung beinhaltet, dass die Segmente symmetrisch zueinander ausgestaltet sind. Es kann sich beispielsweise um zwei Hälften eines Zylinders handeln. Die Idee ist, dass die Segmente quasi miteinander kurzgeschlossen sind, so dass sich z.B. die Wirkungen von Kräften, die auf die Seite des Piezoantriebs wirken, kompensieren. Gleichzeitig werden auch pyroelektrische Effekte verhindert, wodurch der Antrieb auch in explosionsgefährdeten Bereichen einsetzbar ist.

Vorteilhaft sind die Ausgestaltungen, in denen es sich bei dem piezo-elektrischens Element um mindestens einen Stapel bestehend aus piezo-elektrischen Elementen handelt. Zur Anordnung von piezo-elektrischen Elementen in einem Stapel siehe z.B. das Patent DE 198 41 597. Die dünneren piezo-elektrischen Elemente haben den Vorteil, kostengünstiger zu sein als z.B. höhere Zylinder. Um eine Krafterhöhung zu ermöglichen, lassen sich diese Elemente jedoch passend zu Stapeln verbinden. Vorteilhaft dafür ist, wenn die piezo-elektrischen Elemente im Stapel derartig angeordnet sind, dass sich mindestens zwei Segmente gleicher Polarisation einander gegenüber befinden und sich im Wesentlichen gegenseitig bedecken, und dass sich mindestens eine Außenfläche ergibt, die aus mindestens zwei Segmenten mit unterschiedlicher Polarisation besteht. Gleiches gilt, wenn die piezo-elektrischen Elemente im Stapel derartig einander gegenüber liegen, dass sich die Segmente im Wesentlichen bedecken, die die gleiche Kraftkomponente ausüben bzw. empfangen, und wenn es mindestens eine Außenfläche mit mindestens zwei Segmenten gibt, die unterschiedliche Kraftkomponenten ausüben und empfangen. Dies
entspricht jeweils einer Anordnung, in der die piezo-elektrischen Elemente im Stapel mechanisch in Reihe und elektrisch parallel geschaltet sind. Für die effektive Benutzung der piezo-elektrischen Elemente im Stapel ist mindestens ein elektrisch leitfähiges Bauteil zwischen ihnen vorgesehen, so dass die Segmente der Außenflächen der piezo-elektrischen Elemente im Stapel miteinander kurzgeschlossen sind und/oder dass die Außenflächen der piezo-elektrischen Elemente, die sich im Stapel einander gegenüberliegen, miteinander kurzgeschlossen sind. Dabei kann eine Verbindungsvorrichtung vorgesehen sein, so dass die piezo-elektrischen Elemente im Stapel unter Druckspannung stehen. Andere Befestigungsmöglichkeiten sind Klebe-, Löt- und/oder Schweißschichten zwischen den Elementen und/oder eine Verschraubung.

Die geometrische Ausgestaltung des piezo-elektrischen Elements ist kaum einer Begrenzung unterworfen. Es kann scheiben- oder ringförmig, rund oder eckig sein. Wichtig ist nur, dass sich eine Außenfläche ergibt mit mindestens zwei Segmenten mit unterschiedlicher Polarisation oder dass sich eine Außenfläche ergibt, die mindestens zwei unterschiedliche Kraftkomponenten erzeugen kann. Für einen kostengünstigen und platzsparenden Einbau piezo-elektrischen Elements ist es möglich, im piezo-elektrischen Element Bohrungen zur Fixierung und/oder zur Durchführung von elektrischen Bauteilen, z.B. Drähte, anzubringen.

Um mit dem elektrischen Signal eine Kippbewegung zu erzeugen, bzw. um eine Kippbewegung in ein elektrisches Signal zu verwandeln, ist auf der Außenfläche des piezo-elektrischen Elements mindestens eine Elektrode vorgesehen, welche mit mindestens zwei Segmenten mit unterschiedlicher Polarisation leitend verbunden ist, bzw. welche mit zwei Segmenten verbunden ist, die unterschiedliche Kraftkomponenten auf die mechanisch schwingfähige Einheit ausüben, bzw. von ihr empfangen. Eine andere Möglichkeit, je nach Platz und Ausgestaltungsspielraum ist, dass auf der Außenfläche des piezo-elektrischen Elements mindestens eine erste Elektrode und mindestens eine zweite Elektrode vorgesehen sind, wobei die erste Elektrode mindestens mit einem ersten
Segment einer ersten Polarisation leitend verbunden ist, und wobei die zweite Elektrode mindestens mit einem zweiten Segment einer zweiten Polarisation leitend verbunden ist, wobei die erste Polarisation des ersten Segments unterschiedlich zu der zweiten Polarisation des zweiten Segments ist, und
wobei die erste und die zweite Elektrode elektrisch miteinander verbunden sind. Eine andere Möglichkeit ist, dass die erste Elektrode mindestens mit einem ersten Segment, das eine erste Kraftkomponente ausübt und empfängt, leitend verbunden ist, und dass die zweite Elektrode mindestens mit einem zweiten Segment, das eine zweite Kraftkomponente ausübt und empfängt, leitend verbunden ist, wobei die erste Kraftkomponente des ersten Segments unterschiedlich zu der zweiten Kraftkomponente des zweiten Segments ist, und wobei die erste und die zweite Elektrode elektrisch miteinander verbunden sind. Es muss also nur ermöglicht werden, dass unterschiedliche Segmente des piezo-elektrischen Elements das gleiche Signal erreichen, wobei diese Segmente aufgrund des Signals mit unterschiedlichen Kraftkomponenten auf die mechanisch schwingfähige Einheit reagieren, bzw. umgekehrt muss das Signal, das sich aus den unterschiedlichen Kraftkomponenten ergibt, passend abgeleitet werden. Zur Verbindung zwischen Elektrode und piezo-elektrischem Element ist sinnvollerweise mindestens eine Klebe-, Löt- und/oder Schweißschicht und/oder eine Verschraubung vorgesehen.

Eine sinnvolle Ausbildung beinhaltet, dass mindestens zwei piezo-elektrische Elemente oder mindestens zwei Stapel bestehend aus piezo-elektrischen Elementen oder mindestens ein piezo-elektrisches Element und mindestens einen Stapel vorgesehen ist, wobei ein piezo-elektrisches Elemente oder ein Stapel dazu dient, die mechanisch schwingfähige Einheit zu Schwingungen anzuregen, und wobei ein anderes piezo-elektrisches Element oder ein anderer Stapel die Schwingungen der mechanisch schwingfähigen Einheit empfängt. Hierbei dient also ein Teil des Piezoantriebs der Erregung der Schwingungen und ein anderer Teil dient dem Empfang der Schwingungen. Eine Möglichkeit ist, zwischen diese beiden funktionalen Abschnitte zur mechanischen Entkopplung eine Trennscheibe anzubringen.

Weiterhin ist in einer vorteilhaften Ausbildung zwischen dem piezo-elektrischen Element und der mechanisch schwingfähigen Einheit mindestens eine Klebe-, Löt- und/oder Schweißschicht und/oder eine Verschraubung vorgesehen. Diese Verbindung dient der Fixierung der schwingfähiger Einheit mit dem Antrieb und soll gleichzeitig die Kraftübertragung gewährleisten.

Sinnvolle und von der Praxis her bekannte und erprobte Ausgestaltungen beinhalten, dass es sich bei der mechanisch schwingfähigen Einheit um eine Schwinggabel oder um einen Einstab handelt, wobei die Schwinggabel oder der Einstab an einer Basiseinheit befestigt ist. Dies kann z.B. dadurch geschehen, dass die mechanisch schwingfähige Einheit an einer Membran befestigt ist. Bei der Basiseinheit handelt es sich meist um den Gehäuseteil, der an dem Behälter befestigt wird, in dem sich das Medium befindet, dessen physikalische Größe bestimmt und/oder überwacht werden soll.

Zunächst sollen Anwendungen des piezo-elektrischen Elements bei Einstäben diskutiert werden. Eine Ausgestaltung besteht aus einem inneren Schwingstab innerhalb einer äußeren Röhre. Der inneren Stab ist mit einem Ende an einer Fixiereinheit in der Basiseinheit befestigt. Dies ist das feste Ende des inneren Stabes. Das andere Ende des inneren Stabes ist als freies Ende ausgestaltet. Das piezo-elektrische Element ist vorteilhaft innerhalb der Basiseinheit befestigt und regt somit den inneren Stab, die äußere Röhre oder den inneren Stab und die äußere Röhre zu Schwingungen an, bzw. das piezo-elektrische Element empfängt die entsprechenden Schwingungen. Dazu sieht es eine Ausgestaltung vor, dass das piezo-elektrische Element am Fixierelement des inneren Stabes mit dem inneren Stab verbunden ist, wobei der das piezo-elektrische Element auf der Seite des Fixierelements angebracht ist, die dem freien Ende des inneren Stabes zugewandt oder abgewandt ist.

Eine weitere Umsetzung beinhaltet, dass ein zweites Fixierelement in der Basiseinheit vorgesehen ist, an dem die äußere Röhre fixiert ist. Dies ermöglicht es, dass das piezo-elektrische Element zwischen dem Fixierelement des inneren Stabes und dem zweiten Fixierelement der äußeren Röhre befestigt ist. Somit kann das piezo-elektrische Element auch die äußere Röhre zu Schwingungen anregen, bzw. dessen Schwingungen empfangen. Dies ist besonders dann wichtig, wenn die äußere Röhre z.B. durch Kontakt mit einem Schüttgut blockiert ist. Würde in diesem Fall durch die Konstruktion nur der innere Stab zu Schwingungen angeregt werden, so ließe er sich auch trotz der Blockierung der äußeren Röhre zu Schwingungen anregen und es könnte zu Fehlinterpretationen der Messergebnisse kommen. Diese Fehlinterpretation wird umgangen, indem auch die äußere Röhre zu Schwingungen angeregt wird.

Eine andere Möglichkeit ist, dass es sich bei der mechanisch schwingfähigen Einheit um einen inneren Schwingstab innerhalb einer äußeren Röhre handelt, wobei die äußere Röhre mit einem Ende an der Basiseinheit fixiert und am anderen Ende mit einer Kappe versehen ist, und wobei der innere Schwingstab an dieser Kappe befestigt ist. Es handelt sich also um einen Einstab, der quasi an einem Ende eingefaltet worden ist. Bei dieser Umsetzung bietet es sich an, dass das piezo-elektrische Element zwischen dem inneren Stab und der Kappe fixiert wird.

Eine andere Realisierung ist, dass es sich bei der mechanisch schwingfähigen Einheit um einen Einstab mit einem Kompensationsgewicht und zwei Lagerungspunkten handelt, wobei sich ein Ende des Stabes innerhalb einer Basiseinheit befindet. Hierbei ist es sinnvoll, wenn das piezo-elektrische Element am Einstab innerhalb der Basiseinheit hinter dem Kompensationsgewicht befestigt ist.

Eine andere Klasse der mechanisch schwingfähigen Einheiten sind Schwinggabeln mit zwei Gabelzinken, wobei beide an der Basiseinheit fixiert sind. Bei der Basiseinheit kann es sich ebenfalls beispielsweise um eine Membran handeln. Im folgenden werden einige Möglichkeiten der Fixierung der Gabelzinken an der Basiseinheit aufgezählt. Es lassen sich beide Gabelzinken getrennt an der Basiseinheit z.B. durch einzelne Scheiben fixieren. Es lassen sich aber auch beide Gabelzinken durch eine gemeinsamen Scheibe fixieren. Eine Möglichkeit ist auch, dass die beiden Gabelzinken innerhalb der Basiseinheit mit einem gemeinsamen U-förmigen Verbindungsstück fixiert sind. Bei diesen Realisierungen sind jeweils zwei piezo-elektrische Elemente vorgesehen, die jeweils mit den Gabelzinken verbunden sind. Eine andere Weiterbildung mit nur einem das piezo-elektrischen Element ergibt sich, wenn beide Gabelzinken innerhalb der Basiseinheit durch das Querteil eines gemeinsamen T-förmigen Verbindungsstücks fixiert sind. Dann lässt sich das piezo-elektrische Element innerhalb der Längsseite des T-förmigen Verbindungsstücks zwischen der ersten und der zweiten Gabelzinke anbringen, und nur ein das piezo-elektrisches Element reicht aus, um beide Gabelzinken schwingen zu lassen.

Die zuvor genannten Ausgestaltungen beziehen sich jeweils auf piezo-elektrische Elemente, die jeweils nur zwei Segmente mit unterschiedlichen Polarisationen oder mit unterschiedlichen Kraftkomponenten aufwiesen. Eine weitere Ausgestaltung ist, dass auf einer Außenfläche des piezo-elektrischen Elements vier Segmente mit zwei unterschiedlichen Polarisationen bzw. mit zwei Kraftkomponenten vorgesehen sind, wobei die Polarisationen bzw. Kraftkomponenten der benachbarten Segmente jeweils unterschiedlich sind. Dieses piezo-elektrische Element lässt sich dann sehr effektiv ebenfalls bei einer Schwinggabel mit zwei Gabelzinken anwenden, wenn jeweils die Segmente gleicher Polarisation bzw. gleicher Kraftkomponente über den Gabelzinken positioniert sind.

Die Erfindung wird anhand der nachfolgenden Zeichnungen näher erläutert. Es zeigt:
- Fig. 1:: prinzipieller Aufbau eines Teiles der Vorrichtung;
- Fig. 2:: einen Aufbau eines piezo-elektrischen Elements mit zwei Segmenten;
- Fig. 3:: einen Aufbau eines piezo-elektrischen Elements mit zwei Segmenten und mit einer Bohrung;
- Fig. 4:: das beispielhafte Erzeugen einer Kippbewegung durch einen Stapel aus zwei piezo-elektrischen Elementen;
- Fig. 4a:: einen vergrößerten Ausschnitt von Fig. 4;
- Fig. 5:: die perspektivische Darstellung einer Art der Anordnung zweier piezo-elektrischer Elemente mit zwei Segmenten in einem Stapel;
- Fig. 6:: die Seitenansicht eines Stapels aus zwei piezo-elektrischen Elementen mit Elektroden;
- Fig. 7:: die Verdeutlichungen einiger möglicher Kräfte auf ein piezo-elektrisches Element und der resultierenden Signale;
- Fig. 8:: einen Einstab als mechanisch schwingfähige Einheit, bei dem sich ein innerer Stab in einer äußeren Röhre befindet und bei dem der innere Stab am festen Ende der äußeren Röhre fixiert ist;
- Fig. 9:: vgl. Figur 8, eine andere Art der Befestigung des piezo-elektrischen Elements;
- Fig. 10:: vgl. Figur 8, eine weitere Art der Befestigung des piezo-elektrischen Elements;
- Fig. 11:: einen Einstab als mechanisch schwingfähige Einheit, bei dem sich ein innerer Stab in einer äußeren Röhre befindet und an der Endkappe der äußeren Röhre fixiert ist;
- Fig. 12:: einen Einstab mit Zusatzgewicht und zwei Auflagepunkten;
- Fig. 13:: eine Gabel mit zwei Gabelzinken als mechanisch schwingfähige Einheit mit zweipiezo-elektrischen Elements;
- Fig. 14:: vgl. Figur 13, eine andere Art der Fixierung der Gabelzinken;
- Fig. 15:: vgl. Figur 13, eine weitere Art der Fixierung der Gabelzinken;
- Fig. 16:: eine Gabel mit zwei Gabelzinken als mechanisch schwingfähige Einheit mit einem piezo-elektrischen Element;
- Fig. 17:: einen Aufbau eines piezo-elektrischen Elements mit vier Segmenten und mit einer Bohrung;
- Fig. 18:: die perspektivische Darstellung einer Art der Anordnung zweier piezo-elektrischer Elemente mit vier Segmenten für einen Stapel;

- Fig. 19:: eine Gabel mit zwei Gabelzinken als mechanisch schwingfähige Einheit mit einem piezo-elektrischen Element, das vier Segmente aufweist; und
- Fig. 20:: einen Schnitt durch den Aufbau in Figur 19.

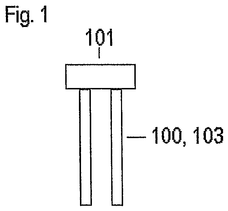

Figur 1 zeigt die in der Erfindung behandelten Bestandteile der Vorrichtung zur Bestimmung und/oder Überwachung der physikalischen Größe eines Mediums: mechanisch schwingfähige Einheit 100 und Antriebs-/Empfangseinheit 101. Das Beispiel zeigt hier als mechanisch schwingfähige Einheit 100 eine Schwinggabel 103. Dies soll jedoch keinerlei Beschränkung darstellen, da im Weiteren z.B. auch Einstäbe als mechanisch schwingfähige Einheiten 100 diskutiert werden.

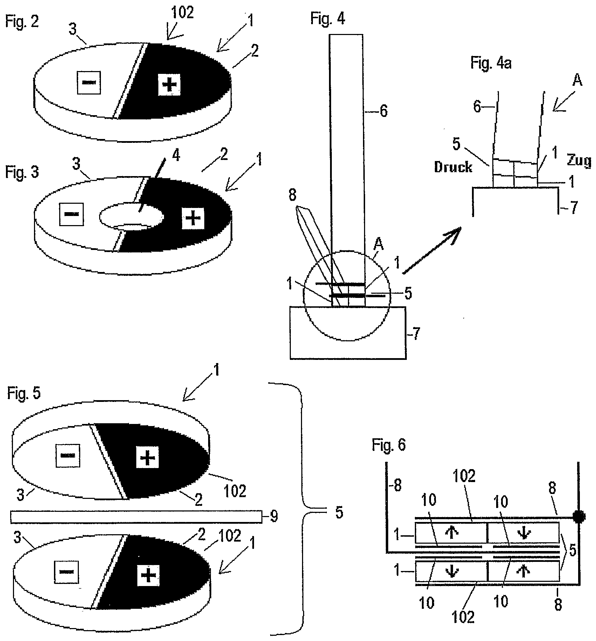

In den Figuren Fig. 2 und Fig. 3 ist der Aufbau einer vorteilhaften Ausführungsform eines piezo-elektrischen Elements 1 dargestellt. Als Beispiel findet sich eine runde Scheibe, deren Außenfläche 102 die zwei Segmente 2, 3 aufweist, deren Polarisationen einander entgegengesetzt sind (hier dargestellt durch Plus + und Minus -). Für das Durchführen von Bauteilen oder für das Fixieren des Elements 1 ist es möglich, eine oder mehrere Bohrungen 4 in der Scheibe anzubringen (Fig. 3). Die Tatsache, dass hier und im folgenden die piezo-elektrischen Elemente 1 rund dargestellt sind, soll keine Beschränkung der Allgemeinheit darstellen. Die geometrische Ausgestaltung der piezo-elektrischen Elemente 1 unterliegt keinerlei Beschränkung. Es kann sich also z.B. auch um eckige Scheiben o.ä. handeln. Es sollte nur sichergestellt sein, dass die mechanisch schwingfähige Einheit mit mindestens zwei Segmenten 2, 3 mit unterschiedlicher Polarisation, bzw. mit unterschiedlicher Kraftkomponente verbunden ist.

In Fig. 4 ist dargestellt, wie beispielsweise ein Stapel 5 aus zwei piezo-elektrischen Elementen 1 einen Einstab 6 direkt zu Kippschwingungen anregt. An einer Basiseinheit 7 ist der Stapel 5 angebracht. An und in diesem Stapel 5 befinden sich drei elektrisch leitfähige Bauteile 8. Mit dem Stapel 5 ist ein Einstab 6 verbunden. Der vergrößerte Ausschnitt A (Fig. 4a) zeigt den Bereich um den Stapel 5. Wird eine Spannung an die elektrisch leitfähigen Bauteile 8 angelegt (die leitfähigen Bauteile sind wegen der Übersicht in dem vergrößerten Ausschnitt nicht dargestellt), so zieht sich der Stapel 5 an der einen Seite zusammen und dehnt sich an der anderen aus. Somit wirkt auf den Einstab 6 eine Zug- und eine Druckkraft. Diese beiden Kraftkomponenten führen dazu, dass der Einstab 6 ein direktes Kippmoment erfährt. Dabei wird die Kippbewegung in diesem Beispiel in einer Ebene ausgeführt, die senkrecht auf der Verbindungsebene von Stapel 5 und Einstab 6 steht. Durch das Anlegen einer Wechselspannung führt der Einstab 6 eine Schwingung in dieser durch die Geometrie spezifizierten Ebene aus.

Figur 5 demonstriert, wie zwei piezo-elektrische Elemente 1 angeordnet sein können, so dass sich ein Stapel 5 ergibt, wie er z.B. in Fig. 4 dargestellt ist. Ein Vorteil des Stapels 5 liegt darin, dass sich eine Krafterhöhung ergibt, wodurch sich größere Amplituden erzeugen lassen als bei der Benutzung von dünneren piezo-elektrischen Elementen 1. Weiterhin ist - bis zu einer gewissen Höhe - ein Stapel 5 aus flachen piezo-elektrischen Elementen 1 preisgünstiger als ein einziges piezo-elektrisches Element 1 gleicher Höhe. Die beiden piezo-elektrischen Elemente 1 sind so angeordnet, dass sich jeweils die Segmente 2, 3 mit gleicher Polarisation, bzw. mit gleicher Kraftkomponente gegenüberliegen. Dies kann dadurch verdeutlicht werden, dass quasi zwei Hände Applaus klatschen. Zwischen den beiden Elementen 1 befindet sich ein elektrisch leitfähiges Bauteil 9, welches die Aufgabe erfüllt, die Segmente 2 ,3 der Elemente 1 und die Außenflächen 102 innerhalb des Stapels 5 kurzzuschließen. Eine Möglichkeit für das elektrisch leitfähige Element 9 ist z.B. eine Lötfahne.

In Figur 6 findet sich eine Seitenansicht eines Stapels 5 zweier piezo-elektrischer Elemente 1. Die Polarisationen, bzw. Kraftkomponenten sind hier mit Pfeilen angedeutet. Auch hier liegen gleiche Polarisationen, bzw. Kraftkomponenten einander gegenüber. Zwischen den Elementen 1 befindet sich eine Elektrode 8, die mit den piezo-elektrischen Elementen 1 über die Verbindungselemente 10 wie z.B. Kleber, Lötstellen oder Schweißstellen verbunden ist. Alternativ wäre auch eine Vorrichtung möglich, durch die die piezo-elektrischen Elemente 1 unter Druckspannung stehen. An den beiden Außenflächen 102 des Stapels befinden sich zwei weitere Elektroden 8, die miteinander verbunden sind. Dabei wechseln sich zum Betreiben des Stapels 5 die Vorzeichen der an den Elektroden 8 anliegenden Spannungen jeweils ab, so dass sich eine elektrische Parallelschaltung ergibt.

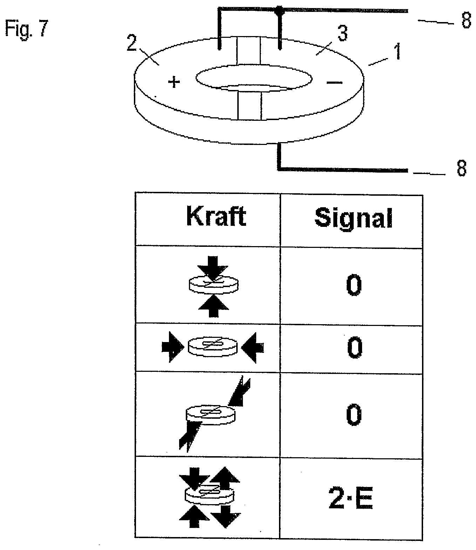

In Figur 7 ist ein großer Vorteil der piezo-elektrischen Elemente der Erfindung demonstriert. Dargestellt ist ein solches Element 1 mit den beiden Elektroden 8. Darunter ist die Wirkung unterschiedlicher Kräfte (gekennzeichnet durch die Pfeile) auf dieses Element verdeutlicht. Symmetrische Kräfte heben sich jeweils gegenseitig in ihrer Wirkung auf und erzeugen somit kein Signal. Einzig eine Kippbewegung auf der Außenseite des piezo-elektrischen Elements 1 mit den Segmenten 2, 3 mit einander entgegengesetzter Polarisation ergibt ein Signal. Bei der Kippbewegung handelt es sich um eine Bewegung, die sich z.B. in die beiden Kraftkomponenten Druck und Zug zerlegen lässt. Das Signal ist hier bezeichnet mit 2 * E, weil sich durch die Kräfte, die von oben und unten auf das piezo-elektrische Element 1 wirken, ein doppelt so großes elektrisches Potential ergibt wie bei der Kraft durch die Kippbewegung nur auf einer Seite. Somit ist das piezo-elektrische Element unempfindlich gegenüber den meisten Störkräften.

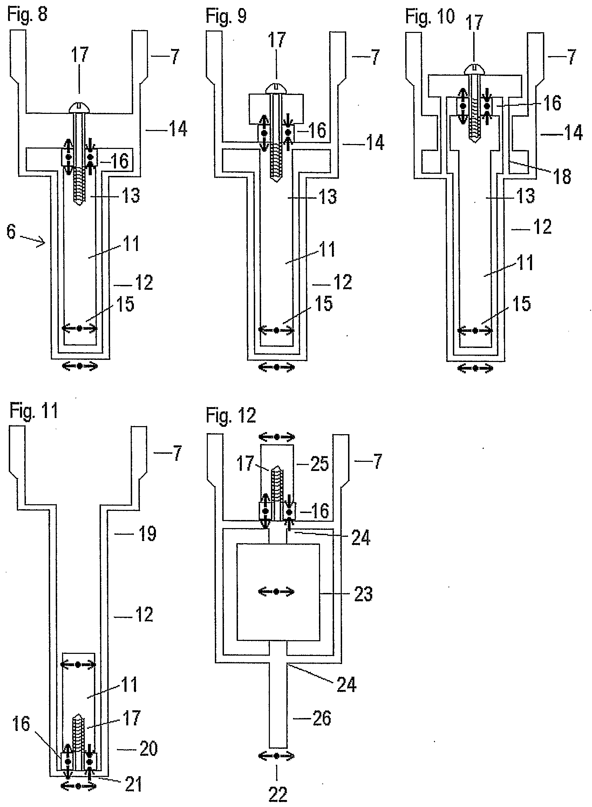

In den Figuren Fig. 8 bis Fig. 12 sind Beispiele verdeutlicht, wie das piezo-elektrische Element 16 mit zwei Segmenten 2, 3 jeweils zur Schwingungserregung eines Einstabs 6 verwendet werden kann. In allen folgenden Figuren verdeutlichen die Pfeile die wirkenden Kräfte. Bei den Kräften handelt es sich bei den piezo-elektrischen Elementen 16 um Druck und Zug; bei den mechanisch schwingfähigen Einheiten 6 handelt es sich um die aus Druck und Zug resultierende Kippbewegung. Gleichzeitig wird durch diese Pfeile auch die Lage der Segmente 2, 3 des piezo-elektrischen Elements 16 verdeutlicht. Dabei handelt es sich jedoch nur um einige Beispiele, die einige bevorzugte Realisierungen verdeutlichen sollen.

Die Figuren Fig. 8 bis Fig. 10 zeigen jeweils einen Einstab 6, bei dem sich ein innerer Stab 11 in einer äußeren Röhre 12 befindet. Ein Ende des inneren Stabes 11 ist als festes Ende 13 an einem Fixierelement, z.B. an einer Membran 14 innerhalb der Basiseinheit 7 befestigt. Das andere Ende des inneren Stabes 11 ist als freies Ende 15 ausgebildet. Das piezo-elektrische Element 16 ist über eine Schraubverbindung 17 am Fixierelement 14 mit dem inneren Stab 11 verbunden.

In Figur 8 befindet sich das piezo-elektrische Element 16 auf der Seite des Fixierelements 14, die dem freien Ende 15 des inneren Stabes 11 zugewandt ist. In Figur 9 befindet er sich auf der abgewandten Seite. In beiden Fällen wird durch das piezo-elektrische Element 16 nur der innere Stab 11 zu Schwingungen angeregt. Dies kann nachteilig sein, wenn die äußere Röhre 12 z.B. durch Schüttgut blockiert ist. In diesen Fällen kann zwar möglicherweise die äußere Röhre 12 nicht schwingen, aber dennoch lässt sich die innere Röhre 11 zu Schwingungen anregen, was zu Fehlinterpretationen führt.

In Figur 10 ist daher die äußere Röhre 12 über die Befestigungseinheit 18 ebenfalls mit dempiezo-elektrischen Element 16 verbunden, so dass die äußere Röhre 12 ebenfalls zu Schwingungen angeregt werden kann.

In Figur 11 ist die äußere Röhre 12 an einem Ende 19 mit der Basiseinheit 7 verbunden und am anderen Ende 20 mit einer Kappe 21 verschlossen. An dieser Kappe 21 sind über eine Schraubverbindung 17 der innere Stab 11 und das piezo-elektrische Element 16 fixiert. Bei dieser Ausgestaltung handelt es sich also um einen Einstab 6, dessen Ende quasi eingefaltet worden ist.

Figur 12 zeigt einen Einstab 22 mit einem Zusatzgewicht 23, wobei der Einstab 22 zwei Auflagepunkte 24 in der Basiseinheit 7 aufweist. Hierbei ist das piezo-elektrische Element 16 an dem Ende 26 des Einstabs 22 befestigt, das sich innerhalb der Basiseinheit 7 befindet.

Ein Einstab 6 benötigt nur das Kippmoment oder die Drehkraft in seiner Wurzel, d.h. in dem Bereich, an welchem er mit der Basiseinheit 7 verbunden ist. Für den Antrieb einer Schwinggabel 103 mit zwei Gabelzinken 27 ist ggf. eine kompliziertere Kräfteverteilung erforderlich.

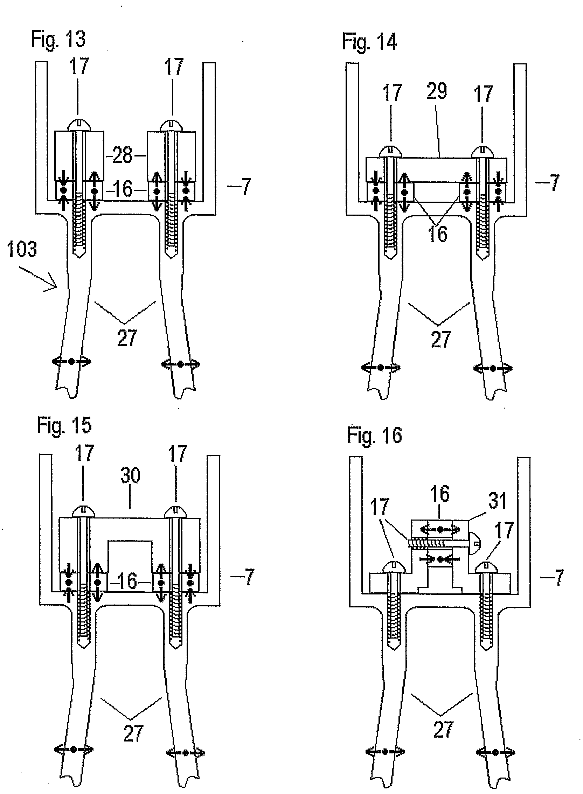

In den Figuren Fig. 13 bis Fig. 16 ist die Anwendung bei Schwinggabeln 103 mit zwei Gabelzinken 27 als mechanisch schwingfähiger Einheit demonstriert. In den Figuren Fig. 13 bis Fig. 15 sind jeweils zwei piezo-elektrische Elemente-16 erforderlich. Die Ausgestaltung in Figur 16 benötigt nur ein piezo-elektrisches Element einen 16. Bei diesen Figuren Fig. 13 bis Fig. 16 ist zunächst an das piezo-elektrische Element 16 mit zwei Segmenten 2, 3 gedacht. Eine Anwendung eines piezo-elektrischen Elements 16 mit mehreren Segmenten würde ggf. leichte Umänderungen der Realisierung erforderlich machen.

In Figur 13 ist jeder Gabelzinken 27 mit einer Schraubverbindung 17 und einem eigenen Fixierblock 28 mit der Basiseinheit 7 verbunden.

In Figur 14 sind beide Gabelzinken 27 innerhalb der Basiseinheit 7 über eine gemeinsamen Scheibe 29 miteinander verbunden.

Die Ausgestaltung der Scheibe 29 als gemeinsamen Verbindungsstücks wird in Figur 15 zu einem U-förmigen Verbindungsstück 30 erweitert.

Figur 16 demonstriert, wie es möglich ist, für beide Gabelzinken 27 nur einen Piezoantrieb 16 zu benutzen. Dafür sind die Gabelzinken 27 mit einem T-förmigen Verbindungsstück 31 fixiert, in dessen Längsseite sich der Piezoantrieb 16 befindet, der mit einer weiteren Schraubverbindung 17 fixiert ist.

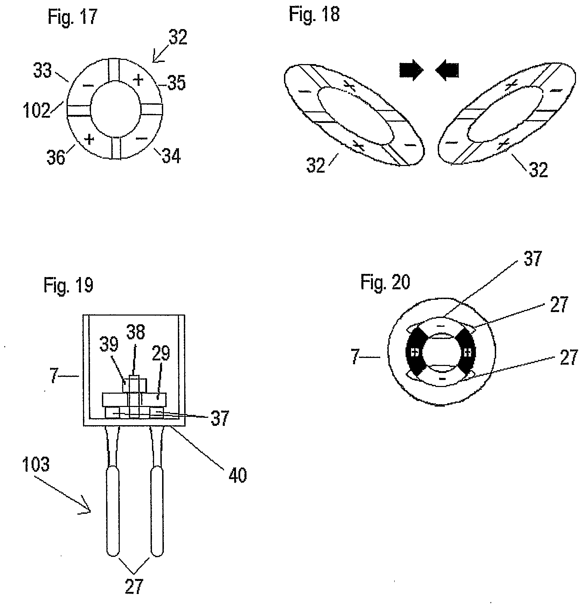

Die Figuren Fig. 17 bis Fig. 20 widmen sich besonders der Ausgestaltung eines das piezo-elektrischen Elements 37, der vier Segmente 33, 34, 35, 36 aufweist.

In Figur 17 ist die Außenfläche 102 eines piezo-elektrischen Elements 32 zu sehen, das vier Segmente 33, 34, 35, 36 aufweist. Die Polarisationen, bzw. die zu erzeugenden und zu empfangenden Kraftkomponenten der Segmente 33 und 34, bzw. 35 und 36 sind jeweils identisch. Die Polarisationen, bzw. Kraftkomponenten der nebeneinander liegenden, benachbarten Segmenten wechseln sich ab.

Eine besonders effektive Ausgestaltung des Zusammenfügens zweier solcher piezo-elektrischer Elemente 32 für einen Stapel ist in Figur 18 zu finden. Dort liegen - wie in Figur 4 - wieder gleiche Polarisationen, bzw. gleiche Kraftkomponenten einander gegenüber.

Figur 19 demonstriert die Anwendung eines solchen piezo-elektrischen Elements mit vier Segmenten 37 bei einer Schwinggabel 103 mit zwei Gabelzinken 27 als mechanisch schwingfähigen Einheit 100. Diese Gabelzinken 27 sind an einer Membran 40 der Basiseinheit 7 fixiert. Innerhalb der Basiseinheit 7 ist ein piezo-elektrisches Element mit vier Segmenten 37 an der Membran 40 befestigt. In Figur 20 ist dargestellt, dass sich die Segmente mit der gleichen Polarisation (hier Minus), bzw. mit der gleichen Kraftkomponente jeweils über den Gabelzinken 27 befinden.

Weitere Ausgestaltungen der mechanisch schwingfähigen Einheit, des piezo-elektrischen Elements und der Art der Verbindung der Einheit mit dem Antrieb lassen sich je nach Anforderung und Möglichkeiten passend konstruieren.

### Bezugszeichenliste

- 1: Piezo-elektrisches Element mit zwei Segmenten
- 2: Segment
- 3: Segment
- 4: Bohrung
- 5: Stapel
- 6: Einstab
- 7: Basiseinheit
- 8: Elektrode
- 9: Elektrisch leitfähiges Bauteil, Lötfahne
- 10: Verbindungselement
- 11: Innerer Stab
- 12: Äußere Röhre
- 13: Festes Ende
- 14: Fixierelement
- 15: Freies Ende
- 16: Piezo-elektrisches Element
- 17: Verschraubung
- 18: Befestigungseinheit in der Basiseinheit
- 19: Festes Ende
- 20: Freies Ende
- 21: Kappe
- 22: Einstab
- 23: Zusatzgewicht
- 24: Auflagepunkt
- 25: Ende innerhalb der Basiseinheit
- 26: Ende außerhalb der Basiseinheit
- 27: Gabelzinken
- 28: Fixierblock
- 29: Scheibe
- 30: U-förmiges Verbindungsstück
- 31: T-förmiges Verbindungsstück
- 32: Piezo-elektrisches Element mit vier Segmenten
- 33: Segment
- 34: Segment
- 35: Segment
- 36: Segment
- 37: Piezo-elektrisches Element
- 38: mit vier Segmenten
- 39: Stehbolzen
- 40: Mutter
- 41: Membran
- 100: Mechanisch schwingfähige Einheit
- 101: Antriebs-/Empfangseinheit
- 102: Außenfläche
- 103: Schwinggabel
- 31: T-förmiges Verbindungsstück
- 32: Piezo-elektrisches Element mit vier Segmenten
- 33: Segment
- 34: Segment
- 35: Segment
- 36: Segment
- 37: Piezoantrieb mit vier Segmenten
- 38: Stehbolzen
- 39: Mutter
- 40: Membran
- 100: Mechanisch schwingfähige Einheit
- 101: Antriebs-/Empfangseinheit
- 102: Außenfläche
- 103: Schwinggabel

## Patentansprüche

1. Vorrichtung zur Bestimmung und/oder Überwachung eines Füllstands, einer Viskosität, einer Dichte oder einer Temperatur eines Mediums,
mit mindestens einer mechanisch schwingfähigen Einheit (100) und
mindestens einer Antriebs- und Empfangseinheit (101),
wobei die Antriebs (101) die schwingfähige Einheit (100) zu Schwingungen anregt, bzw.
wobei die Empfangseinheit (101) die Schwingungen der schwingfähigen Einheit (100) empfängt, wobei in der Antriebs- und/oder Empfangseinheit (101) mindestens ein piezo-elektrisches Element (1, 16, 32, 37) vorgesehen ist,
das über mindestens eine Außenfläche (102) verfügt,
die aus mindestens zwei Segmenten (2, 3) mit unterschiedlicher Polarisation besteht,
wobei die Polarisationsrichtungen im Wesentlichen einander entgegengerichtet sind,
dass mit der Außenfläche (102) die mechanisch schwingfähige Einheit (100) direkt oder indirekt verbunden ist,
so dass die mechanisch schwingfähige Einheit (100) zu einer Bewegung angeregt wird,
bzw.
so dass eine Bewegung der mechanisch schwingfähigen Einheit (100) empfangen wird,
**dadurch gekennzeichnet dass**
die Bewegung jeweils aus mindestens zwei unterschiedlichen Kraftkomponenten besteht, die einander im Wesentlichen entgegengesetzt sind, und wobei es sich bei den Kraftkomponenten um Zug und Druck, und bei der Bewegung um eine Kippbewegung oder um eine Drehbewegung handelt.

2. Vorrichtung nach Anspruch 1,
**dadurch gekennzeichnet,**
**dass** die Segmente (2, 3) symmetrisch zueinander ausgestaltet sind.

3. Vorrichtung nach Anspruch 1,
**dadurch gekennzeichnet,**
**dass** es sich bei dem piezo-elektrischen Element (1, 16, 32, 37) um mindestens einen Stapel (5) bestehend aus piezo-elektrischen Elementen (1, 32) handelt.

4. Vorrichtung nach Anspruch 3 ,
**dadurch gekennzeichnet,**
**dass** der Stapel (5) aus mindestens zwei piezo-elektrischen Elementen (1, 32) besteht, die derartig angeordnet sind, dass sich eine Kraftverstärkung ergibt.

5. Vorrichtung nach Anspruch 4,
**dadurch gekennzeichnet,**
**dass** die piezo-elektrischen Elemente (1, 32) im Stapel (5) derartig angeordnet sind, dass sich mindestens zwei Segmente (2, 3, 33, 34, 35, 36) gleicher Polarisation einander gegenüber befinden und sich im Wesentlichen gegenseitig bedecken, und dass sich mindestens eine Außenfläche (102) ergibt, die aus mindestens zwei Segmenten (2, 3) mit unterschiedlicher Polarisation besteht.

6. Vorrichtung nach Anspruch 4,
**dadurch gekennzeichnet,**
**dass** die piezo-elektrischen Elemente (1, 32) im Stapel (5) derartig angeordnet sind, dass sich mindestens zwei Segmente (2, 3, 33, 34, 35, 36) einander gegenüber befinden und sich im Wesentlichen gegenseitig bedecken, die jeweils die gleiche Kraftkomponente ausüben, bzw. die gleiche Kraftkomponente empfangen, und dass sich mindestens eine Außenfläche (102) ergibt, die aus mindestens zwei Segmenten (2, 3) besteht, die unterschiedliche Kraftkomponenten ausüben, bzw. empfangen.

7. Vorrichtung nach Anspruch 4,
**dadurch gekennzeichnet,**
**dass** die piezo-elektrischen Elemente (1, 32) im Stapel (5) derartig angeordnet sind, dass sie mechanisch in Reihe und elektrisch parallel geschaltet sind.

8. Vorrichtung nach Anspruch 4,
**dadurch gekennzeichnet,**
**dass** zwischen den piezo-elektrischen Elementen (1, 32) im Stapel (5) mindestens ein elektrisch leitfähiges Bauteil (9) vorgesehen ist.

9. Vorrichtung nach Anspruch 4,
**dadurch gekennzeichnet,**
**dass** die Segmente der Außenflächen der piezo-elektrischen Elemente (1, 32) im Stapel (5) miteinander kurzgeschlossen sind und/oder
**dass** die Außenflächen der piezo-elektrischen Elemente (1, 32), die sich im Stapel (5) einander gegenüberliegen, miteinander kurzgeschlossen sind.

10. Vorrichtung nach Anspruch 4,
**dadurch gekennzeichnet,**
**dass** eine Verbindungsvorrichtung (17) vorgesehen ist, so dass die piezo-elektrischen Elemente (1, 32) im Stapel (5) unter Druckspannung stehen.

11. Vorrichtung nach Anspruch 4 oder 10,
**dadurch gekennzeichnet,**
**dass** zwischen den piezo-elektrischen Elementen (1, 32) im Stapel (5) mindestens eine Klebe-, Löt- und/oder Schweißschicht und/oder eine Verschraubung (10, 17) vorgesehen ist.

12. Vorrichtung nach Anspruch 1,
**dadurch gekennzeichnet,**
**dass** das piezo-elektrisches Element (1, 16, 32, 37) scheiben- oder ringförmig ist.

13. Vorrichtung nach Anspruch 1,
**dadurch gekennzeichnet,**
**dass** im piezo-elektrischen Element (1, 16, 32, 37) mindestens eine Bohrung (4) zur Fixierung und/oder zur Durchführung mindestens eines elektrischen Bauteils vorgesehen ist.

14. Vorrichtung nach Anspruch 1,
**dadurch gekennzeichnet,**
**dass** auf der Außenfläche (102) piezo-elektrischen Elements (1, 16, 32, 37) mindestens eine Elektrode (8) vorgesehen ist, welche mit mindestens zwei Segmenten (2, 3, 33, 34, 35, 36) mit unterschiedlicher Polarisation leitend verbunden ist, bzw.
welche mit mindestens zwei Segmenten (2, 3, 33, 34, 35, 36) leitend verbunden ist, die unterschiedliche Kraftkomponenten ausüben und empfangen.

15. Vorrichtung nach Anspruch 14,
**dadurch gekennzeichnet,**
**dass** zwischen der Elektrode (8) und dem piezo-elektrischen Element (1, 16, 32, 37) mindestens eine Klebe-, Löt- und/oder Schweißschicht (10) und/oder eine Verschraubung (17) vorgesehen ist.

16. Vorrichtung nach einem oder mehreren der vorhergehenden Ansprüche 1 bis 15,
**dadurch gekennzeichnet,**
**dass** mindestens zwei piezo-elektrische Elemente (1, 32) oder mindestens zwei Stapel (5) bestehend aus piezo-elektrischen Elementen (1, 32) oder mindestens ein piezo-elektrisches Element (1, 32) und mindestens einen Stapel (5) vorgesehen ist, wobei ein piezo-elektrisches Elemente (1, 32) oder ein Stapel (5) dazu dient, die mechanisch schwingfähige Einheit (100) zu Schwingungen anzuregen, und wobei ein anderes piezo-elektrisches Element (1, 32) oder ein anderer Stapel (5) die Schwingungen der mechanisch schwingfähigen Einheit (100) empfängt.

17. Vorrichtung nach Anspruch 1,
**dadurch gekennzeichnet,**
**dass** zwischen dem piezo-elektrischen Element (1, 16, 32, 37) und der mechanisch schwingfähigen Einheit (100) mindestens eine Klebe-, Löt- und/oder Schweißschicht (10) und/oder eine Verschraubung (17) vorgesehen ist.

18. Vorrichtung nach einem oder mehreren der Ansprüche 1 bis 17,
**dadurch gekennzeichnet,**
**dass** es sich bei der mechanisch schwingfähigen Einheit (100) um eine Schwinggabel (103) oder um einen Einstab (6) handelt, wobei die Schwinggabel (103) oder der Einstab (6) an einer Basiseinheit (7) befestigt ist.

19. Vorrichtung nach Anspruch 18,
**dadurch gekennzeichnet,**
**dass** es sich bei der mechanisch schwingfähigen Einheit (100) um einen inneren Schwingstab (11) innerhalb einer äußeren Röhre (12) handelt,
**dass** in einer Basiseinheit (7) ein Fixierelement (14) vorgesehen ist,
an dem ein Ende des inneren Stabes (11) als festes Ende (13) befestigt ist, und dass das andere Ende des inneren Stabes (11) als freies Ende (20) ausgestaltet ist.

20. Vorrichtung nach Anspruch 19,
**dadurch gekennzeichnet,**
**dass** das piezo-elektrische Element (1, 16, 32, 37) innerhalb der Basiseinheit (7) befestigt ist und
**dass** der das piezo-elektrische Element (1, 16, 32, 37) derartig angeordnet ist, dass er den inneren Stab (11) oder die äußere Röhre (12) oder den inneren Stab (11) und die äußere Röhre (12) zu Schwingungen anregt, bzw. deren Schwingungen empfängt.

21. Vorrichtung nach Anspruch 19,
**dadurch gekennzeichnet,**
**dass** das piezo-elektrische Element (1, 16, 32, 37) am Fixierelement (14) des inneren Stabes (11) mit dem inneren Stab (11) verbunden ist,
wobei das piezo-elektrische Element (1, 16, 32, 37) auf der Seite des Fixierelements (14) angebracht ist, die dem freien Ende (15) des inneren Stabes (11) zugewandt oder von ihm abgewandt ist.

22. Vorrichtung nach Anspruch 19,
**dadurch gekennzeichnet,**
**dass** ein zweites Fixierelement (18) in der Basiseinheit (7) vorgesehen ist, an dem die äußere Röhre (12) fixiert ist.

23. Vorrichtung nach Anspruch 22,
**dadurch gekennzeichnet,**
**dass** das piezo-elektrische Element (1, 16, 32, 37) zwischen dem Fixierelement des inneren Stabes (14) und dem zweiten Fixierelement (18) der äußeren Röhre (12) befestigt ist.

24. Vorrichtung nach Anspruch 18,
**dadurch gekennzeichnet,**
**dass** es sich bei der mechanisch schwingfähigen Einheit (100) um einen inneren Schwingstab (11) innerhalb einer äußeren Röhre (12) handelt,
wobei die äußere Röhre (12) mit einem Ende (19) an der Basiseinheit (7) fixiert und am anderen Ende (20) mit einer Kappe (21) versehen ist, und
wobei der innere Schwingstab (11) an der Kappe (21) befestigt ist.

25. Vorrichtung nach Anspruch 24,
**dadurch gekennzeichnet,**
**dass** das piezo-elektrische Element (1, 16, 32, 37) zwischen dem inneren Stab (11) und der Kappe (21) fixiert ist.

26. Vorrichtung nach Anspruch 18,
**dadurch gekennzeichnet,**
**dass** es sich bei der mechanisch schwingfähigen Einheit (100) um einen Einstab (22) mit einem Kompensationsgewicht (23) und zwei Lagerungspunkten (24) handelt,
wobei sich ein Ende (25) des Stabes (22) innerhalb einer Basiseinheit (7) befindet.

27. Vorrichtung nach Anspruch 26,
**dadurch gekennzeichnet,**
**dass** piezo-elektrische Element (1, 16, 32, 37) am Einstab (22) innerhalb der Basiseinheit (7) hinter dem Kompensationsgewicht (23) befestigt ist.

28. Vorrichtung nach Anspruch 18,
**dadurch gekennzeichnet,**
**dass** es sich bei der mechanisch schwingfähigen Einheit (100) um eine Schwinggabel (103) mit einer ersten und einer zweiten Gabelzinke (27) handelt, wobei die erste und die zweite Gabelzinke (27) an der Basiseinheit (7) fixiert sind.

29. Vorrichtung nach Anspruch 28,
**dadurch gekennzeichnet,**
**dass** die erste und die zweite Gabelzinke (27) getrennt an der Basiseinheit (7) fixiert sind.

30. Vorrichtung nach Anspruch 28,
**dadurch gekennzeichnet,**
**dass** die erste und die zweite Gabelzinke (27) innerhalb der Basiseinheit (7) durch eine gemeinsamen Scheibe (29) fixiert sind.

31. Vorrichtung nach Anspruch 28,
**dadurch gekennzeichnet,**
**dass** die erste und die zweite Gabelzinke (27) innerhalb der Basiseinheit (7) mit einem gemeinsamen U-förmigen Verbindungsstück (30) fixiert sind.

32. Vorrichtung nach Anspruch 28,29,30 oder 31,
**dadurch gekennzeichnet,**
**dass** mindestens ein erstes und ein zweites piezo-elektrische Element (1, 16, 32, 37) vorgesehen sind,
wobei das erste piezo-elektrische Element (1, 16, 32, 37) innerhalb der Basiseinheit (7) an der ersten Gabelzinke (27) und das zweite piezo-elektrische Element (1, 16, 32, 37) innerhalb der Basiseinheit (7) an der zweiten Gabelzinke (27) fixiert ist.

33. Vorrichtung nach Anspruch 28,
**dadurch gekennzeichnet,**
**dass** die erste und die zweite Gabelzinke (27) innerhalb der Basiseinheit (7) durch das Querteil eines gemeinsamen T-förmigen Verbindungsstücks (31) fixiert sind.

34. Vorrichtung nach Anspruch 33,
**dadurch gekennzeichnet,**
**dass** mindestens ein piezo-elektrisches Element (1, 16, 32, 37) vorgesehen ist, das innerhalb der Längsseite des T-förmigen Verbindungsstücks (31) zwischen der ersten und der zweiten Gabelzinke (27) fixiert ist.

35. Vorrichtung nach Anspruch 1,
**dadurch gekennzeichnet,**
**dass** ein piezo-elektrisches Element (37) vorgesehen ist,
der über mindestens eine Außenfläche (102) verfügt,
die vier Segmente (33, 34, 35, 36) mit zwei unterschiedlichen Polarisationen vorweist,
wobei die Polarisationen der benachbarten Segmente (33, 34, 35, 36) jeweils unterschiedlich sind,
bzw.
die vier Segmente (33, 34, 35, 36) vorweist,
die zwei unterschiedliche Kraftkomponenten ausüben und empfangen,
wobei die Kraftkomponenten der benachbarten Segmente (33, 34, 35, 36) jeweils unterschiedlich sind.

36. Vorrichtung nach Anspruch 28 und 35,
**dadurch gekennzeichnet,**
dass) das piezo-elektrische Element (37) so innerhalb der Basiseinheit (7) mit den beiden Gabelzinken (27) verbunden ist, dass jeweils die Segmente (33, 34, 35, 36) gleicher Polarisation, bzw. gleicher Kraftkomponente über den Gabelzinken (27) positioniert sind.

## Claims

1. Apparatus for determining and/or monitoring a level, a viscosity, a density or a temperature of a medium,
with at least one unit capable of mechanical oscillation (100) and at least one drive and reception unit (101),
wherein the drive (101) causes the unit capable of oscillation (100) to oscillate, or
wherein the reception unit (101) receives the oscillations of the unit capable of oscillation (100),
wherein at least one piezoelectric element (1, 16, 32, 37) is provided in the drive and/or reception unit (101),
said element having at least one exterior surface (102),
which is made from at least two segments (2, 3) of different polarization,
wherein the polarization directions are essentially opposed to one another, wherein the unit capable of mechanical oscillation (100) is connected directly or indirectly with the exterior surface (102),
such that the unit capable of mechanical oscillation (100) is excited to move, or
such that a movement of the unit capable of mechanical oscillation (100) is received,
**characterized in that**
the movement consists in each case of at least two different force components, which are essentially opposed to one another, and wherein the force components are pushing and pulling forces, and wherein the movement is a tilting movement or a rotary movement.

2. Apparatus as claimed in Claim 1,
**characterized in that**
the segments (2, 3) are designed in a symmetric manner in relation to one another.

3. Apparatus as claimed in Claim 1,
**characterized in that**
the piezoelectric element (1, 16, 32, 37) is at least a stack (5) consisting of piezoelectric elements (1, 32).

4. Apparatus as claimed in Claim 3,
**characterized in that**
the stack (5) consists of at least two piezoelectric elements (1, 32), which are arranged in such a way to amplify the force.

5. Apparatus as claimed in Claim 4,
**characterized in that**
the piezoelectric elements (1, 32) are arranged in the stack (5) in such a way that at least two segments (2, 3, 33, 34, 35, 36) of the same polarization are opposite one another and essentially mutually cover one another, and that there is at least one exterior surface (102), which consists of at least two segments (2, 3) of different polarization.

6. Apparatus as claimed in Claim 4,
**characterized in that**
the piezoelectric elements (1, 32) are arranged in the stack (5) in such a way that at least two segments (2, 3, 33, 34, 35, 36) are opposite one another and essentially mutually cover one another, which exert in each case the same force component or receive the same force component, and that there is at least one exterior surface (102), which consists of at least two segments (2, 3), which exert or receive different force components.

7. Apparatus as claimed in Claim 4,
**characterized in that**
the piezoelectric elements (1, 32) are arranged in the stack (5) in such a way that they are switched mechanically in series and electrically in parallel.

8. Apparatus as claimed in Claim 4,
**characterized in that**
at least one electrically conductive component (9) is provided between the piezoelectric elements (1, 32) in the stack (5).

9. Apparatus as claimed in Claim 4,
**characterized in that**
the segments of the exterior surfaces of the piezoelectric elements (1, 32) in the stack (5) are shorted with one another and/or
**in that** the exterior surfaces of the piezoelectric elements (1, 32), which are located opposite one another in the stack (5) are shorted with one another.

10. Apparatus as claimed in Claim 4,
**characterized in that**
a connection unit (17) is provided, such that the piezoelectric elements (1, 32) in the stack (5) are under compressive stress.

11. Apparatus as claimed in Claim 4 or 10,
**characterized in that**
at least one adhesive, solder and/or welding layer and/or a threaded joint (10, 17) is provided between the piezoelectric elements (1, 32) in the stack (5).

12. Apparatus as claimed in Claim 1,
**characterized in that**
the piezoelectric element (1, 16, 32, 37) is in the shape of a disc or ring.

13. Apparatus as claimed in Claim 1,
**characterized in that**
at least one bore (4) is provided in the piezoelectric element (1, 16, 32, 37) for the fixing and/or the passage of at least one electrical component.

14. Apparatus as claimed in Claim 1,
**characterized in that**
at least one electrode (8) is provided on the exterior surface (102) of the piezoelectric element (1, 16, 32, 37), said electrode (8) being connected in a conductive manner to at least two segments (2, 3, 33, 34, 35, 36) of different polarization, or
said electrode being connected in a conductive manner to at least two segments (2, 3, 33, 34, 35, 36) that exert and receive different force components.

15. Apparatus as claimed in Claim 14,
**characterized in that**
at least one adhesive, solder and/or welding layer (10) and/or a threaded joint (17) is provided between the electrode (8) and the piezoelectric element (1, 16, 32, 37).

16. Apparatus as claimed in one or more of the previous Claims 1 to 15,
**characterized in that**
at least two piezoelectric elements (1, 32) or at least two stacks (5) consisting of piezoelectric elements (1, 32) or at least one piezoelectric element (1, 32) and at least one stack (5),
wherein a piezoelectric element (1, 32) or a stack (5) serves to cause the unit capable of mechanical oscillation (100) to oscillate, and wherein another piezoelectric element (1, 32) or another stack (5) receives the oscillations of the unit capable of mechanical oscillation (100).

17. Apparatus as claimed in Claim 1,
**characterized in that**
at least one adhesive, solder and/or welding layer (10) and/or a threaded joint (17) is provided between the piezoelectric element (1, 16, 32, 37) and the unit capable of mechanical oscillation (100).

18. Apparatus as claimed in one or more of the Claims 1 to 17,
**characterized in that**
the unit capable of mechanical oscillation (100) is a tuning fork (103) or a single rod (6), the tuning fork (103) or the single rod (6) being fixed to a base unit (7).

19. Apparatus as claimed in Claim 18,
**characterized in that**
the unit capable of mechanical oscillation (100) is an inner vibrating rod (11) located inside an outer tube (12),
**in that** a fixing element (14) is provided in a base unit (7),
on which one end of the inner rod (11) is secured as a fixed end (12), and **in that** the other end of the inner rod (11) is designed as a free end (20).

20. Apparatus as claimed in Claim 19,
**characterized in that**
the piezoelectric element (1, 16, 32, 37) is secured within the base unit (7), and **in that** the piezoelectric element (1, 16, 32, 37) is arranged in such a way that it causes the inner rod (11) or the outer tube (12) or the inner rod (11) and the outer tube (12) to oscillate, or receives the oscillations of same.

21. Apparatus as claimed in Claim 19,
**characterized in that**
the piezoelectric element (1, 16, 32, 37) is connected to the inner rod (11) at the fixing element (14) of the inner rod (11),
wherein the piezoelectric element (1, 16, 32, 37) is mounted on the side of the fixing element (14) that faces towards or away from the free end (15) of the inner rod (11).

22. Apparatus as claimed in Claim 19,
**characterized in that**
a second fixing element (18) is provided in the base unit (7) on which the outer tube (12) is fixed.

23. Apparatus as claimed in Claim 22,
**characterized in that**
the piezoelectric element (1, 16, 32, 37) is secured between the fixing element of the inner rod (14) and the second fixing element (18) of the outer tube (12).

24. Apparatus as claimed in Claim 18,
**characterized in that**
the unit capable of mechanical oscillation (100) is an inner vibrating rod (11) located inside an outer tube (12),
wherein the outer tube (12) is fixed on the base unit (7) at one end and is provided with a cap (21) on the other end, and wherein the inner vibrating rod (11) is secured on the cap (21).

25. Apparatus as claimed in Claim 24,
**characterized in that**
the piezoelectric element (1, 16, 32, 37) is fixed between the inner rod (11) and the cap (21).

26. Apparatus as claimed in Claim 18,
**characterized in that**
the unit capable of mechanical oscillation (100) is a single rod (22) with a compensation weight (23) and two suspension points (24),
wherein one end (25) of the rod (22) is located inside a base unit (7).

27. Apparatus as claimed in Claim 26,
**characterized in that**
the piezoelectric element (1, 16, 32, 37) is secured on the single rod (22) inside the base unit (7) behind the compensation weight (23).

28. Apparatus as claimed in Claim 18,
**characterized in that**
the unit capable of mechanical oscillation (100) is a tuning fork (103) with a first and a second tine (27), wherein the first and the second tine are fixed on the base unit (7).

29. Apparatus as claimed in Claim 28,
**characterized in that**
the first and the second tine (27) are fixed separately on the base unit (7).

30. Apparatus as claimed in Claim 28,
**characterized in that**
the first and the second tine (27) are fixed within the base unit (7) by a common disc (29).

31. Apparatus as claimed in Claim 28,
**characterized in that**
the first and second tine (27) are fixed within the base unit (7) by a common U-shaped connection piece (30).

32. Apparatus as claimed in Claim 28, 29, 30 or 31,
**characterized in that**
at least a first and a second piezoelectric element (1, 16, 32, 37) are provided, wherein the first piezoelectric element (1, 16, 32, 37) is fixed within the base unit (7) on the first tine (27) and the second piezoelectric element (1, 16, 32, 37) is fixed within the base unit (7) on the second tine (27).

33. Apparatus as claimed in Claim 28,
**characterized in that**
the first and the second tine (27) is fixed within the base unit (7) by the transverse part of a common T-shaped connection piece (31).

34. Apparatus as claimed in Claim 33,
**characterized in that**
at least one piezoelectric element (1, 16, 32, 37) is provided, which is fixed within the longitudinal side of the T-shaped connection piece (31) between the first and the second fork tine (27).

35. Apparatus as claimed in Claim 1,
**characterized in that**
a piezoelectric element (37) is provided,
which has at least one exterior surface (102),
that has four segments (33, 34, 35, 36) with two different polarizations,
wherein the polarizations of the neighboring segments (33, 34, 35, 36) are different in each case,
or
which has four segments (33, 34, 35, 36),
which exert and receive two different force components,
wherein the force components of the neighboring segments (33, 34, 35, 36) are different in each case.

36. Apparatus as claimed in Claim 28 and 35,
**characterized in that**
the piezoelectric element (37) is connected inside the base unit (7) to the two tines (27) in such a way that the segments (33, 34, 35, 36) of identical polarization or of the same force component are positioned over the tines (27) in each case.

## Revendications

1. Dispositif destiné à la détermination et/ou la surveillance d'un niveau, d'une viscosité, d'une densité ou d'une température d'un produit,
avec au moins une unité mécanique apte à vibrer (100) et au moins une unité d'entraînement et de réception (101),
pour lequel l'unité d'entraînement (101) excite en vibrations l'unité apte à vibrer (100),
ou
pour lequel l'unité de réception (101) reçoit les vibrations de l'unité apte à vibrer (100),
au moins un élément piézo-électrique (1, 16, 32, 37) étant prévu dans l'unité d'entraînement et de réception (101),
lequel élément dispose d'une surface extérieure (102),
qui est constituée d'au moins deux segments (2, 3) de polarisation différente,
les directions de polarisation étant pour l'essentiel opposées,
l'unité mécanique apte à vibrer (100) étant reliée directement ou indirectement avec la surface extérieure (102),
de sorte que l'unité mécanique apte à vibrer (100) est excitée en un mouvement,
ou
de sorte qu'un mouvement de l'unité mécanique apte à vibrer (100) soit reçu,
**caractérisé**
**en ce que** le mouvement est constitué d'au moins deux composantes de force différentes, qui sont pour l'essentiel opposées, et s'agissant, concernant les composantes de force, d'une traction et d'une pression, et concernant le mouvement, d'un mouvement de basculement ou d'un mouvement de rotation.

2. Dispositif selon la revendication 1,
**caractérisé**
**en ce que** les segments (2, 3) sont conçus de façon symétrique l'un par rapport à l'autre.

3. Dispositif selon la revendication 1,
**caractérisé**
**en ce qu'**il s'agit, concernant l'élément piézo-électrique (1, 16, 32, 37), au moins d'une pile (5) constituée d'éléments piézo-électriques (1, 32).

4. Dispositif selon la revendication 3,
**caractérisé**
**en ce que** la pile (5) est constituée d'au moins deux éléments piézo-électriques (1, 32), qui sont disposés de telle sorte à obtenir une amplification de la force.

5. Dispositif selon la revendication 4,
**caractérisé**
**en ce que** les éléments piézo-électriques (1, 32) sont disposés dans la pile (5) de telle sorte qu'au moins deux segments (2, 3, 33, 34, 35, 36) de polarisation identique se trouvent face à face et se recouvrent pour l'essentiel mutuellement, et
**en ce qu'**il en résulte au moins une surface extérieure (102), laquelle est constituée d'au moins deux segments (2, 3) de polarisation différente.

6. Dispositif selon la revendication 4,
**caractérisé**
**en ce que** les éléments piézo-électriques (1, 32) sont disposés dans la pile (5) de telle sorte qu'au moins deux segments (2, 3, 33, 34, 35, 36) se trouvent face à face et se recouvrent pour l'essentiel mutuellement, qui exercent chacun la même composante de force, ou qui reçoivent la même composante de force, et
**en ce qu'**il en résulte au moins une surface extérieure (102), qui se compose d'au moins deux segments (2, 3), qui exercent ou reçoivent différentes composantes de force.

7. Dispositif selon la revendication 4,
**caractérisé**
**en ce que** les éléments piézo-électriques (1, 32) sont disposés dans la pile (5) de telle sorte qu'ils soient commutés mécaniquement en série et électriquement en parallèle.

8. Dispositif selon la revendication 4,
**caractérisé**
**en ce qu'**est prévu, entre les éléments piézo-électriques (1, 32), dans la pile (5), au moins un composant électriquement conducteur (9).

9. Dispositif selon la revendication 4,
**caractérisé**
**en ce que** les segments des surfaces extérieures des éléments piézo-électriques (1, 32) disposés dans la pile sont court-circuités les uns aux autres et/ou en ce que les surfaces extérieures des éléments piézo-électriques (1, 32), qui sont placés face à face dans la pile (5), sont court-circuités les uns aux autres.

10. Dispositif selon la revendication 4,
**caractérisé**
**en ce qu'**est prévu un dispositif de liaison (17), de sorte que les éléments piézo-électriques (1, 32) placés dans la pile (5) sont soumis à une contrainte de pression.

11. Dispositif selon la revendication 4 ou 10,
**caractérisé**
**en ce qu'**est prévue, entre les éléments piézo-électriques (1, 32) placés dans la pile (5), au moins une couche de colle, de brasure et/ou de soudure et/ou un vissage (10, 17).

12. Dispositif selon la revendication 1,
**caractérisé**
**en ce que** l'élément piézo-électrique (1, 16, 32, 37) est en forme de disque ou d'anneau.

13. Dispositif selon la revendication 1,
**caractérisé**
**en ce qu'**est prévu, dans l'élément piézo-électrique (1, 16, 32, 37), au moins un perçage (4) destiné à la fixation et/ou au passage d'au moins un composant électrique.

14. Dispositif selon la revendication 1,
**caractérisé**
**en ce qu'**est prévue, sur la surface extérieure (102) de l'élément piézo-électrique (1, 16, 32, 37), une électrode (8), laquelle électrode est reliée de manière électriquement conductrice avec au moins deux segments (2, 3, 33, 34, 35, 36) de polarisation différente, ou
laquelle électrode est reliée de manière électriquement conductrice avec au moins deux segments (2, 3, 33, 34, 35, 36), qui exercent et reçoivent différentes composantes de force.

15. Dispositif selon la revendication 14,
**caractérisé**
**en ce qu'**est prévue, entre l'électrode (8) et l'élément piézo-électrique (1, 16, 32, 37), au moins une couche de colle, de brasure et/ou de soudure (10) et/ou un vissage (17).

16. Dispositif selon l'une ou plusieurs des revendications précédentes 1 à 15,
**caractérisé**
**en ce que** sont prévus au moins deux éléments piézo-électriques (1, 32) ou au moins deux piles (5) constituées d'éléments piézo-électriques (1, 32) ou au moins un élément piézo-électrique (1, 32) et au moins une pile (5),
un élément piézo-électrique (1, 32) ou une pile (5) servant à exciter en vibrations l'unité mécanique apte à vibrer (100), et un autre élément piézo-électrique (1, 32) ou une autre pile (5) recevant les vibrations de l'unité mécanique apte à vibrer (100).

17. Dispositif selon la revendication 1,
**caractérisé**
**en ce qu'**est/sont prévu(s), entre l'élément piézo-électrique (1, 16, 32, 37) et l'unité mécanique apte à vibrer (100) au moins une couche de colle, de brasure ou de soudure (10) et/ou un vissage (17).

18. Dispositif selon l'une des revendications 1 à 17,
**caractérisé**
**en ce qu'**il s'agit, concernant l'unité mécanique apte à vibrer (100), d'une fourche vibrante (103) ou d'une monotige (6), la fourche vibrante (103) ou la monotige (6) étant fixée sur une unité de base (7).

19. Dispositif selon la revendication 18,
**caractérisé**
**en ce qu'**il s'agit, concernant l'unité mécanique apte à vibrer (100), d'une tige vibrante intérieure (11) placée à l'intérieur d'un tube extérieur (12),
**en ce qu'**est prévu dans une unité de base (7) un élément de fixation,
auquel est fixé une extrémité de la tige intérieure (11) en tant qu'extrémité fixe (12), et en ce que l'autre extrémité de la tige intérieure (11) est conçue en tant qu'extrémité libre (20).

20. Dispositif selon la revendication 19,
**caractérisé**
**en ce que** l'élément piézo-électrique (1, 16, 32, 37) est fixé à l'intérieur de l'unité de base (7) et
**en ce que** l'élément piézo-électrique (1, 16, 32, 37) est disposé de telle sorte à exciter en vibrations, ou à recevoir ses/leurs vibrations, la tige intérieure (11) ou le tube extérieur (12) ou la tige intérieure (11) et le tube extérieur (12).

21. Dispositif selon la revendication 19,
**caractérisé**
**en ce que** l'élément piézo-électrique (1, 16, 32, 37) est relié sur l'élément de fixation (14) de la tige intérieure (11) avec la tige intérieure (11),
l'élément piézo-électrique (1, 16, 32, 37) étant monté sur le côté de l'élément de fixation (14) faisant face ou situé à l'opposé de l'extrémité libre (15) de la tige intérieure (11).

22. Dispositif selon la revendication 19,
**caractérisé**
**en ce qu'**est prévu un deuxième élément de fixation (18) dans l'unité de base (7), auquel est fixé le tube extérieur (12).

23. Dispositif selon la revendication 22,
**caractérisé**
**en ce que** l'élément piézo-électrique (1, 16, 32, 37) est fixé entre l'élément de fixation de la tige intérieure (14) et le deuxième élément de fixation (18) du tube extérieur (12).

24. Dispositif selon la revendication 18,
**caractérisé**
**en ce qu'**il s'agit, concernant l'unité mécanique apte à vibrer (100), d'une tige vibrante intérieure (11) placée à l'intérieur d'un tube extérieur (12),
le tube extérieur (12) étant fixé avec une extrémité (19) sur l'unité de base (7) et le tube extérieur (12) étant muni d'un chapeau (21) sur son autre extrémité, et la tige vibrante intérieure (11) étant fixée sur le chapeau (21).

25. Dispositif selon la revendication 24,
**caractérisé**
**en ce que** l'élément piézo-électrique (1, 16, 32, 37) est fixé entre la tige intérieure (11) et le chapeau (21).

26. Dispositif selon la revendication 18,
**caractérisé**
**en ce qu'**il s'agit, concernant l'unité mécanique apte à vibrer (100), d'une monotige (22) avec un poids de compensation (23) et deux points de suspension (24),
une extrémité (25) de la tige (22) se trouvant à l'intérieur d'une unité de base (7).

27. Dispositif selon la revendication 26,
**caractérisé**
**en ce que** l'élément piézo-électrique (1, 16, 32, 37) est fixé sur la monotige (22), à l'intérieur de l'unité de base (7), derrière le poids de compensation (23).

28. Dispositif selon la revendication 18,
**caractérisé**
**en ce qu'**il s'agit, concernant l'unité mécanique apte à vibrer (100), d'une fourche vibrante (103) avec une première et une deuxième dent de fourche (27), la première et la deuxième dent de fourche (27) étant fixées sur l'unité de base (7).

29. Dispositif selon la revendication 28,
**caractérisé**
**en ce que** la première et la deuxième dent de fourche (27) sont fixées séparément sur l'unité de base (7).

30. Dispositif selon la revendication 28,
**caractérisé**
**en ce que** la première et la deuxième dent de fourche (27) sont fixées, à l'intérieur de l'unité de base (7), à travers un disque (29) commun.

31. Dispositif selon la revendication 28,
**caractérisé**
**en ce que** la première et la deuxième dent de fourche (27) sont fixées, à l'intérieur de l'unité de base (7), avec une pièce de liaison en forme de U (30) commune.

32. Dispositif selon la revendication 28, 29, 30 ou 31,
**caractérisé**
**en ce qu'**est prévu au moins un premier et un deuxième élément piézo-électrique (1, 16, 32, 37),
le premier élément piézo-électrique (1, 16, 32, 37) étant fixé, à l'intérieur de l'unité de base (7), à la première dent de fourche (27) et le deuxième élément piézo-électrique (1, 16, 32, 37), à l'intérieur de l'unité de base (7), à la deuxième dent de fourche (27).

33. Dispositif selon la revendication 28,
**caractérisé**
**en ce que** première et la deuxième dent de fourche (27) est fixée, à l'intérieur de l'unité de base (7), à travers la partie transversale d'une pièce de liaison en forme de T (31).

34. Dispositif selon la revendication 33,
**caractérisé**
**en ce qu'**est prévu au moins un élément piézo-électrique (1, 16, 32, 37), qui est fixé au sein du côté longitudinal de la pièce de liaison en forme de T (31) entre la première et la deuxième dent de fourche (27).

35. Dispositif selon la revendication 1,
**caractérisé**
**en ce qu'**est prévu un élément piézo-électrique (37),
qui dispose d'au moins une surface extérieure (102),
qui présente quatre segments (33, 34, 35, 36) avec deux polarisations différentes, les polarisations des segments voisins (33, 34, 35, 36) étant respectivement différentes,
ou
qui présente quatre segments (33, 34, 35, 36),
qui exercent et reçoivent deux composantes de force différentes,
les composantes de force des segments voisins (33, 34, 35, 36) étant respectivement différentes.

36. Dispositif selon la revendication 28 et 35,
**caractérisé**
**en ce que** l'élément piézoélectrique (37) est relié à l'intérieur de l'unité de base (7) avec les deux dents de fourche (27) de telle sorte que les segments (33, 34, 35, 36) de polarisation identique, ou de composante de force identique, sont chacun positionnés au-dessus des dents de fourche (27).
